# EUROPÄISCHE PATENTSCHRIFT

(11) **EP 0 869 292 B1**
(45) Veröffentlichungstag und Bekanntmachung des Hinweises auf die Patenterteilung: **16.08.2000**
(21) Anmeldenummer: 98105618.7
(22) Anmeldetag: 27.03.1998
(51) Int. Cl.: F16D 65/56

(54) **Selbsttätige Nachstellvorrichtung für eine Trommelbremse**
Automatic adjusting device for a drum brake
Dispositif automatique de rattrapage de jeu pour un frein à tambour

(30) Priorität: 05.04.1997 DE 19714153
(43) Veröffentlichungstag der Anmeldung: 07.10.1998
(73) Patentinhaber: Continental Teves AG & Co. oHG, 60488 Frankfurt (DE)
(72) Erfinder: Winter, Klaus, 65760 Eschborn (DE)
(74) Vertreter: Portwich, Peter

(56) Entgegenhaltungen:
- EP-A- 0 216 478
- GB-A- 2 049 077
- US-A- 4 148 380

## Beschreibung

Die Erfindung betrifft eine selbsttätige Nachstellvorrichtung für eine Trommelbremse gemäß dem Oberbegriff des Patentanspruchs 1.

Eine derartige gattungsgemäße Nachstellvorrichtung ist beispielsweise aus der Deutschen Patentschrift DE 30 19 214 C2 bekannt. Die beschriebene Nachstellvorrichtung besitzt eine zwischen den beiden radial aufspreizbaren Bremsbacken angeordnete verlängerbare Nachstellstrebe, die über ein Klinken-Sperrad-Getriebe verfügt. Eine Nachstellung und damit eine Verlängerung der Nachstellstrebe wird dabei durch Drehung des Sperrades infolge einer Schwenkbewegung der Nachstellklinke bewerkstelligt. Zur Verhinderung einer übermäßigen Nachstellung bei thermisch stark belasteter Bremse sowie Bremstrommel ist an der Nachstellvorrichtung bzw. insbesondere an der Nachstellklinke ein Bimetallstreifen vorgesehen, der bei Erreichen einer vorbestimmten Temperatur die Nachstellklinke außer Eingriff mit dem Sperrad bringt und somit eine Nachstellung verhindert. Durch Verhinderung einer übermäßigen Nachstellung bei starker thermischer Belastung wird ein Zuspannen und damit Blockieren der Trommelbremse bei schrumpfender Bremstrommel infolge späterer Abkühlung vermieden. Als ungünstig bei einer derartigen Anordnung erweist sich insbesondere die Befestigung des Bimetallstreifens durch einen zusätzlichen Nietvorgang an der Nachstellklinke sowie auch die in Einzelfällen unzureichende Abspreizkraft des Bimetallstreifens, die die Gefahr einer unzuverlässigen Abschaltung der Nachstellung bei thermischer Überlastung in sich birgt.

Aus der amerikanischen Patentschrift US 4 148 380 ist ferner einer Nachstellvorrichtung zu entnehmen, die innerhalb des Klinkensperradgetriebes neben der Nachstellklinike noch einen Rasthebel aufweist, der das mit einer Außenverzahnung versehene Sperrad beim Nachstellvorgang gegen ein Zurückdrehen verrastet. Dabei ist ein Bimetallstreifen spiralförmig um die verlängerbare Nachstellstrebe herumgewickelt und befindet sich damit zumindest abschnittsweise zwischen der Nachstellstrebe und dem parallel dazu angeordneten Rasthebel. Bei thermischer Überlastung der Bremse weitet sich die Bimetallspirale radial auf und spreizt damit den Rasthebel vom Sperrad ab. Das Sperrad kann sich damit im Falle thermischer Überlastung bei erfolgter Nachstellung in gleichem Maße wieder zurückdrehen und somit den gesamten Nachstellvorgang wieder rückgängig machen. Im einzelnen ist die Bimetallspirale lediglich mit einem ersten Ende an der Nachstellstrebe befestigt und kann bei radialer Aufweitung infolge Erwärmung wegen mangelndem Halt an der Nachstellstrebe nur eine sehr begrenzte Abspreizkraft auf den Rasthebel übertragen. Eine sichere thermische Abschaltung der Nachstellvorrichtung ist damit nicht gegeben.

Ausgehend vom aufgeführten Stand der Technik ist die Aufgabe der Erfindung darin zu sehen, eine Nachstellvorrichtung mit einem Bimetallelement anzugeben, welches unter geringem fertigungstechnischen Aufwand zuverlässig eine übermäßige Nachstellung bei starker thermischer Belastung der Bremse verhindert.

Erfüllt wird die Aufgabe durch die Merkmalskombination des Patentanspruchs 1. Danach besteht die selbsttätige Nachstellvorrichtung einer Trommelbremse im wesentlichen aus einer verlängerbaren Nachstellstrebe, die zwischen den beiden radial aufspreizbaren Bremsbacken angeordnet ist und ein Klinken-Sperrad-Getriebe aufweist. Darüber hinaus besitzt die Nachstellvorrichtung ein Bimetallelement, das bei Erreichen einer vorbestimmten Temperatur eine Nachstellung verhindert. Dabei ist das zwei Bimetallagen aufweisende Bimetallelement zwischen einer in das Sperrad eingreifenden Nachstellklinke und der Nachstellstrebe um letztere herumgeführt. Bei üblicherweise bolzen- bzw. hülsenartiger Nachstellstrebe ist das zweilagige Bimetallelement vorzugsweise kreisrund gebogen und liegt bei geringem Spiel unmittelbar an der Umfangsfläche der Nachstellstrebe an. Wird eine bestimmte Temperatur erreicht, so weitet sich das Bimetallelement radial auf und ist damit in der Lage, die Nachstellklinke vom Sperrad abzuheben und eine Nachstellung bei thermischer Überlastung zu verhindern.

In einer bevorzugten Ausführungsform nach Anspruch 2 besitzt das Bimetallelement zwei Bimetallschichten, die derartig übereinanderliegend angeordnet sind, daß innerhalb jeder Bimetallschicht genau die Metallschichten mit größerer Wärmeausdehnung benachbart sind, wobei allgemein die Schichtung der beiden Bimetallagen radial übereinanderliegend ausgeführt ist.

In einer besonders günstigen Variante nach Anspruch 3 umgibt das Bimetallelement die Nachstellstrebe um weniger als 360°. Im Zusammenhang mit der geeigneten Schichtung der beiden Bimetallagen ergibt sich damit bei Erreichen einer vorbestimmten Temperatur ein stärkeres Anlegen der radial innenliegenden Bimetallschicht um die Nachstellstrebe und gleichsam ein radiales Aufspreizen der radial außenliegenden Bimetallage. Dadurch kann die radial aufgespreizte Bimetallage gegen die Nachstellklinke drücken und diese vom außen verzahnten Sperrad der Nachstellvorrichtung abheben.

In einer besonders einfachen Ausführung ist das Bimetallelement aus einem einteiligen Bimetallstreifen gefertigt, wobei der Bimetallstreifen zunächst derart geknickt ist, daß die freien Enden des Bimetallstreifens schichtartig übereinanderliegen und die Metallschichten mit größerer Wärmeausdehnung zueinander benachbart sind. Danach kann das Bimetallelement in die gewünschte, vorzugsweise kreisförmige Kontur der Umfangsfläche der Nachstellstrebe gebogen werden. Damit liegen die beiden Arme des geknickten, einteiligen Bimetallstreifens lose aufeinander und gestatten somit die voneinander unabhängige Bewegung der beiden freien Enden des geknickten Bimetallstreifens im Falle der Erwärmung.

Die weiteren Unteransprüche beschreiben vorteilhafte Möglichkeiten der verdrehsicheren Befestigung des Bimetallelementes an der Nachstellstrebe. Im Falle eines einteiligen, geknickten Bimetallstreifens kann dabei eine solche Befestigung entweder über den wulstartigen Knickbogen oder aber über ein freies Ende des Bimetallstreifens innerhalb einer Ausnehmung der Nachstellstrebe erfolgen.

Ausführungsbeispiele der Erfindung sind anhand der Zeichnung dargestellt und im folgenden näher erläutert.

Es zeigen:
- Fig. 1: zwei teilweise geschnittene Ansichten einer Trommelbremse mit thermisch abschaltbarer Nachstellvorrichtung, wobei die Nachstellvorrichtung mittels eines Klinken-Sperrad-Getriebes betätigt wird,
- Fig. 2: drei teilweise geschnittene Ansichten einer Nachstellstrebe mit Klinken-Sperrad-Getriebe und Bimetallelement,
- Fig. 3: Abbildungen zweier Ausführungsvarianten eines einteiligen Bimetallelementes mit verdrehsicherer Halterung an der Nachstellstrebe.

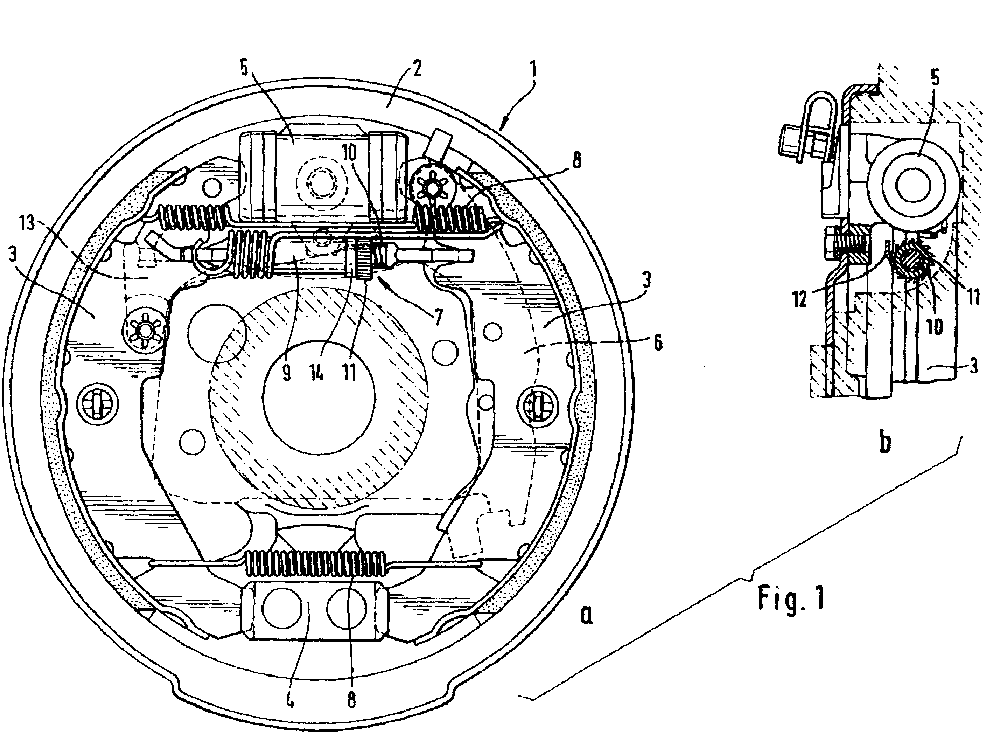

Die in Fig. 1 dargestellte Trommelbremse 1 ist mit ihren einzelnen Komponenten auf einer Trägerplatte 2 montiert und insgesamt innerhalb einer nicht gezeigten Bremstrommel angeordnet. Im einzelnen enthält die Trommelbremse 1 im wesentlichen zwei radial aufspreizbare Bremsbacken 3, die jeweils an einem ersten Ende schwenkbar an einem Abstützelement 4 anliegen und mit ihrem anderen Ende mit einem hydraulische Bremszylinder 5 in Verbindung stehen. Dabei ist der Bremszylinder 5 im Falle einer Betriebsbremsung mit hydraulischem Druck beaufschlagbar und somit in der Lage, durch radiales Aufspreizen der Bremsbacken diese in Anlage mit der nicht gezeigten Bremstrommel zu bringen. Darüber hinaus kann die in Fig. 1 gezeigte Trommelbremse auch für Feststellbremsungen herangezogen werden, wobei sie in diesem Falle mittels eines Feststellbremshebels 6 mechanisch betätigbar ist. Der Feststellbremshebel 6 überträgt die Betätigungskraft direkt auf eine der Bremsbacken und über eine zwischen den Bremsbacken 3 angeordnete Nachstellstrebe 7 indirekt auf die andere Bremsbacke. Zum Lüften der ungespannten Trommelbremse 1 werden die Bremsbacken 3 mittels mehrerer Zugfedern 8 von der Bremstrommel abgehoben.

Zur Einhaltung eines annähernd gleichbleibenden Betätigungsweges insbesondere bei Feststellbremsbetätigung, verfügt die Trommelbremse 1 über eine Nachstellvorrichtung, die im wesentlichen aus einer zwischen den Bremsbacken 3 angeordneten verlängerbaren Nachstellstrebe 7 mit einem Klinken-Sperrad-Getriebe besteht. Die zweiteilige Nachstellstrebe 7 besitzt eine an einer ersten Bremsbacke 3 anliegende Hülse 9, in der ein an der zweiten Bremsbacke 3 anliegender Bolzen 10 axial verschiebbar aufgenommen ist. Der Bolzen 10 besitzt ein selbsthemmendes Außengewinde, auf dem ein außenverzahntes Sperrad 11 (oder aber auch Nachstellritzel) drehbar angeordnet ist. In die Außenverzahnung des Sperrades 11 greift eine Nachstellklinke 12 ein, die üblicherweise einstückig mit einem in Fig. 1 gestrichelt angedeuteten Nachstellhebel 13 verbunden ist. Der Nachstellhebel mit Nachstellklinke 12 ist seinerseits schwenkbar an einer der Bremsbacken 3 gelagert und wird bei Überschreiten eines definierten Zustellmaßes der Bremsbacken 3 derart verschwenkt, daß die Nachstellklinke 12 das Sperrad 11 auf dem Bolzen 10 rastenartig verdreht. Dadurch wird stufenförmig eine Verlängerung der Nachstellstrebe 7 bewirkt, was einen Ausgleich des Reibbelagverschleißes gewährleistet. Nähere Details zu einer derartigen verlängerbaren Nachstellstrebe mit Klinkensperrad-Getriebe sind bereits aus dem Stand der Technik bekannt und können beispielsweise aus den bereits in der Beschreibung aufgeführten Dokumenten entnommen werden.

Zur Vermeidung einer übermäßigen Nachstellung im Falle einer thermischen Überlastung der Bremse und daraus resultierender Aufweitung der Bremstrommel sind gattungsgemäße Nachstellvorrichtungen nicht selten mit einer thermischen Abschaltung versehen. Häufig kommt dabei ein Bimetallbauteil zum Einsatz, das durch Verformung infolge thermischer Belastung die Nachstellvorrichtung außer Kraft setzt.

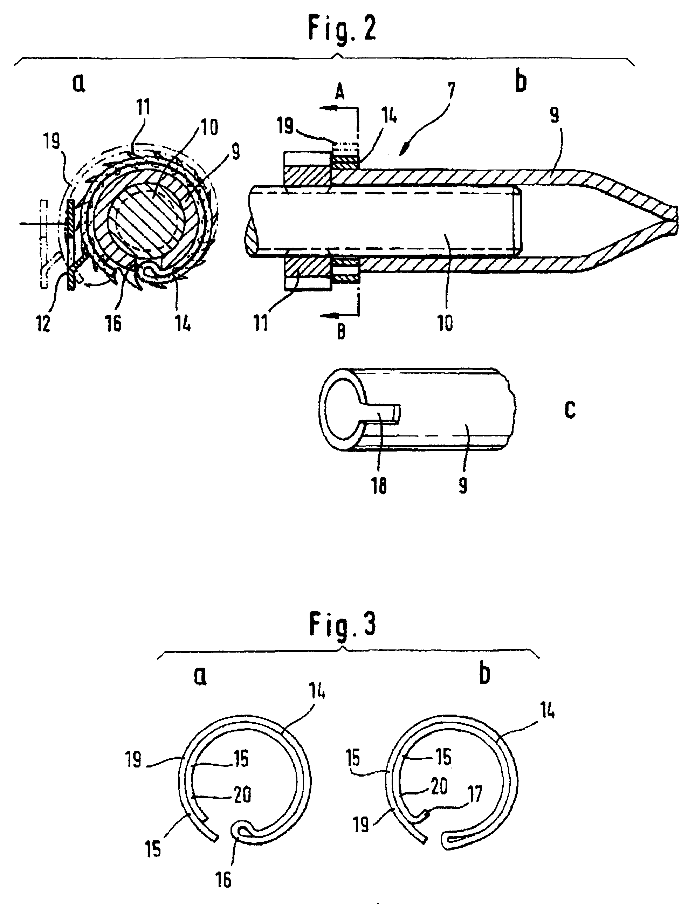

Den Figuren 2 und 3 sind in vergrößerter Darstellung Varianten einer verlängerbaren Nachstellstrebe 7 mit einem erfindungsgemäßen Bimetallelement 14 für eine Trommelbremse 1 gemaß Fig. 1 zu entnehmen. Das Bimetallelement besteht hierbei aus einem einfachen Bimetallstreifen, der derart geknickt ist, daß die beiden freien Enden 15 lose aufeinanderliegen. Es ist zu beachten, daß der Bimetallstreifen so geknickt wird, daß die Metallschichten innerhalb der freien Enden 15 mit größerer Wärmeausdehnung einander zugekehrt übereinander liegen. Anschließend wird das damit zweilagige Bimetallelement 14 gebogen und dadurch der Umfangskontur der verlängerbaren Nachstellstrebe 7 angepaßt. Vorzugsweise ergibt sich dabei eine kreisförmige Kontur für das Bimetallelement. Zur verdrehsicheren Halterung des Bimetallelementes 14 an der Nachstellstrebe 7 ragt das Bimetallelement 14 entweder mit einem wulstartigen Knickbogen 16 oder aber einem umgebogenen Vorsprung 17 radial nach innen in eine entsprechend gestaltete Ausnehmung 18 vorzugsweise innerhalb der Hülse 9 der Nachstellstrebe 7 hinein. Gemäß Fig. 2b wird das Bimetallelement 14 dadurch verliersicher zwischen dem Sperrad 11 und der Hülse 9 fixiert. Die beiden freien Enden 15 des Bimetallelementes 14 liegen radial übereinandergeschichtet am Umfang der Hülse 9 an und sind damit zwischen der Nachstellstrebe 7 und dem mit der Klinke 12 in das Sperrad 11 eingreifenden Nachstellhebel 13 angeordnet. Bei thermischer Überlastung wird aufgrund der Schichtung des Bimetallelementes 14, wobei die Metallschichten der beiden freien Enden 15 mit größerer Wärmeausdehnung zwischen den beiden Armen unmittelbar benachbart sind, der radial außenliegende Arm 19 radial aufgespreizt, während sich der radial innenliegende Arm 20 des Bimetallelementes 14 noch stärker an die Hülse 9 andrückt. Durch das radiale Aufspreizen des radial außenliegenden Armes 19 wird die Nachstellklinke 12 gemäß der gestrichelten Darstellung in Fig. 1 vom Sperrad 11 abgehoben und setzt damit die Nachstellvorrichtung außer Kraft. Der an der Hülse 9 anliegende radial innere Arm 20 umschließt bei erhöhter Temperatur noch stärker die Hülse und verbessert damit entscheidend den Halt des Bimetallelementes 14 an der Nachstellstrebe 7.

Die in Fig. 2c gezeigte Ausführung der Ausnehmung 18 innerhalb der Hülse 9 zur Aufnahme des Bimetallelementes 14 ist als einfache Kerbe gestaltet, wodurch sich auf unkompliziertem Wege die Möglichkeit eröffnet, bestehende Nachstellvorrichtungen ohne thermische Abschaltung mit einem gattungsgemäßen Bimetallelement 14 gemäß den Fig. 2 und 3 nachzurüsten.

Selbstverständlich ist der erfinderische Gedanke nicht nur auf die einteilige Ausführung eines geknickten Bimetallstreifens sowie die dargestellte verdrehsichere Halterung an der Nachstellstrebe 7 beschränkt. Es ist durchaus auch ein Bimetallelement 14 denkbar mit zwei getrennten Bimetallstreifen, die an einem Ende miteinander befestigt sind und in beschriebener Weise mit den einander zugekehrten Metallschichten mit größerer Wärmeausdehnung verschiebbar aufeinander aufliegen. Erst dadurch läßt sich die gewünschte Verformung des Bimetallelementes 14 bei Temperaturerhöhung erzielen. Darüber hinaus sind auch andere Befestigungsmöglichkeiten des Bimetallelementes 14 an der Nachstellstrebe 7, beispielsweise durch Kleben, Nieten oder Schweißen möglich.

## Patentansprüche

1. Selbsttätige Nachstellvorrichtung für eine Trommelbremse (1) mit einer verlängerbaren Nachstellstrebe (7), die ein Klinken-Sperrad-Getriebe aufweist, und mit einem Bimetallelement (14), das bei Erreichen einer vorbestimmten Temperatur eine Nachstellung verhindert, indem eine Nachstellklinke (12) außer Eingriff mit dem Sperrad (11) gebracht wird, dadurch **gekennzeichnet**, daß das Bimetallelement (14) zweilagig um die Nachstellstrebe (7) herumgeführt ist.

2. Nachstellvorrichtung nach Anspruch 1, dadurch **gekennzeichnet**, daß das Bimetallelement (14) zwei Bimetallagen (15,19,20) aufweist, die derart übereinander angeordnet sind, daß die Metallschichten mit größerer Wärmeausdehnung benachbart sind.

3. Nachstellvorrichtung nach einem der vorhergehenden Ansprüche, dadurch **gekennzeichnet**, daß das Bimetallelement (14) die Nachstellstrebe (7) um weniger als 360° umgibt.

4. Nachstellvorrichtung nach einem der vorhergehenden Ansprüche, dadurch **gekennzeichnet**, daß das Bimetallelement (14) aus einem einteiligen Bimetallstreifen besteht, wobei der Bimetallstreifen derart geknickt ist, daß die freien Enden (15) des Bimetallstreifens schichtartig übereinander liegen.

5. Nachstellvorrichtung nach einem der vorhergehenden Ansprüche, dadurch **gekennzeichnet**, daß das Bimetallelement (14) verdrehsicher an der Nachstellstrebe (7) befestigt ist.

6. Nachstellvorrichtung zumindest nach den Ansprüchen 4 und 5, dadurch **gekennzeichnet**, daß das Bimetallelement (14) mit einem wulstartigen Knickbogen (16) in einer entsprechenden Ausnehmung (18) der Nachstellstrebe (7) eingerastet ist.

7. Nachstellvorrichtung zumindest nach Anspruch 5, dadurch **gekennzeichnet**, daß das Bimetallelement (14) mit einem Vorsprung (17) am freien Ende (15) der an der Nachstellstrebe (7) anliegenden Bimetallage (20) in eine entsprechende Ausnehmung (18) der Nachstellstrebe eingreift.

## Claims

1. Automatic adjusting device for a drum brake (1) including an extensible adjusting strut (7) which has a locking pawl/pawl wheel gear assembly, and a bimetal element (14) which prevents readjustment when a predetermined temperature is reached by moving an adjusting pawl (12) out of engagement with the pawl wheel (11),
**characterized** in that the bimetal element (14) is passed around the adjusting strut (7) in two layers.

2. Adjusting device as claimed in claim 1,
**characterized** in that the bimetal element (14) has two bimetal layers (15, 19, 20) which are arranged on top of each other so that the metal layers having a great heat expansion are adjacent to each other.

3. Adjusting device as claimed in any one of the preceding claims,
**characterized** in that the bimetal element (14) encompasses the adjusting strut (7) less than 360°.

4. Adjusting device as claimed in any one of the preceding claims,
**characterized** in that the bimetal element (14) is comprised of a one-part bimetallic strip, with the bimetallic strip being bent in such a fashion that the free ends (15) of the bimetallic strip lie on top of each other like layers.

5. Adjusting device as claimed in any one of the preceding claims,
**characterized** in that the bimetal element (14) is unrotatably attached to the adjusting strut (7).

6. Adjusting device as claimed in any one of claims 4 and 5,
**characterized** in that the bimetal element (14) is locked by a bead-type kink (16) into a corresponding recess (18) of the adjusting strut (7).

7. Adjusting device as claimed in at least claim 5,
**characterized** in that the bimetal element (14) engages into a corresponding recess (18) of the adjusting strut by a projection (17) at the free end (15) of the bimetal layer (20) that abuts on the adjusting strut (7).

## Revendications

1. Dispositif automatique de rattrapage de jeu pour un frein à tambour (1), comportant une bielle de rattrapage de jeu (7) allongeable, qui présente un mécanisme à rochet, et comportant un élément bimétallique (14) qui, à l'atteinte d'une température prédéfinie, empêche le rattrapage de jeu par le fait qu'un cliquet de rattrapage de jeu (12) est désengagé de la roue à rochet (11), **caractérisé** en ce que l'élément bimétallique (14) est placé en deux couches autour de la bielle de rattrapage de jeu (7).

2. Dispositif de rattrapage de jeu selon la revendication 1, **caractérisé** en ce que l'élément bimétallique (14) présente deux couches bimétalliques (15, 19, 20), qui sont superposées de telle sorte que les strates du métal présentant la plus grande dilatation thermique sont voisines.

3. Dispositif de rattrapage de jeu selon l'une quelconque des revendications précédentes, **caractérisé** en ce que l'élément bimétallique (14) entoure la bielle de rattrapage de jeu (7) sur moins de 360°.

4. Dispositif de rattrapage de jeu selon l'une quelconque des revendications précédentes, **caractérisé** en ce que l'élément bimétallique (14) est constitué d'une lame bimétallique d'un seul tenant, la lame bimétallique étant infléchie de telle sorte que les extrémités libres (15) de la lame bimétallique sont superposées à la manière de couches.

5. Dispositif de rattrapage de jeu selon l'une quelconque des revendications précédentes, **caractérisé** en ce que l'élément bimétallique (14) est fixé sans possibilité de rotation sur la bielle de rattrapage de jeu (7).

6. Dispositif de rattrapage de jeu selon au moins les revendications 4 et 5, **caractérisé** en ce que l'élément bimétallique (14) est enclenché par un coude d'inflexion (16) du genre bourrelet dans un évidement correspondant (18) de la bielle de rattrapage de jeu (7).

7. Dispositif de rattrapage de jeu selon au moins la revendication 5, **caractérisé** en ce que l'élément bimétallique (14) s'engage dans un évidement correspondant (18) de la bielle de rattrapage de jeu par une partie saillante (17) à l'extrémité libre de la couche bimétallique (20) appliquée contre la bielle de rattrapage de jeu (7).
